# DEMANDE DE BREVET EUROPEEN

(11) **EP 4 711 282 A1**
(43) Date de publication de la demande: **18.03.2026**
(21) Numéro de dépôt: 25202000.3
(22) Date de dépôt: 12.09.2025
(51) Int. Cl.: B64G 1/64

(54) **DISPOSITIF D'AMARRAGE D'ENGIN SPATIAL**

(30) Priorité: 13.09.2024 FR 2409781
(71) Demandeur: THALES, 92190 Meudon (FR)
(72) Inventeur: Baudassé, Yannick, 06156 CANNES LA BOCCA CEDEX (FR); Lubrano, Gilles, 06156 CANNES LA BOCCA CEDEX (FR); Chassoulier, Damien, 06156 CANNES LA BOCCA CEDEX (FR); VEZAIN, Stéphane, 06156 CANNES LA BOCCA CEDEX (FR); FRANCOIS, Xavier, 06156 CANNES LA BOCCA CEDEX (FR)
(74) Mandataire: Lavoix

(57) **Abrégé**

La présente invention concerne un dispositif d'amarrage spatial (1) comprenant une structure d'accueil (10) d'un engin spatial à amarrer (2), ladite structure d'accueil (10) comprenant un système d'attache magnétique réversible (13), le système d'attache réversible (13) comprenant au moins une ventouse magnétique d'amarrage (130) comprenant une première partie (131) destinée à être portée par l'engin spatial à amarrer (2) et une deuxième partie (132) portée par la structure d'accueil (10), ladite structure d'accueil (10) comprend également une base (11), un module d'accueil (12) et un système de liaison élastique (14) entre la base (11) et le module d'accueil (12), le module d'accueil (12) portant la deuxième partie (132) de ladite au moins une ventouse, le module d'accueil (12) et la base (11) étant disposés en regard l'un de l'autre, et le système réversible d'attache magnétique (13) étant configuré pour permettre le rapprochement et l'éloignement entre la base (11) et le module d'accueil (12).

## Description

L'invention se situe dans le domaine de l'amarrage d'engins spatiaux.

L'amarrage d'un satellite à un engin spatial, notamment un autre satellite, un vaisseau ou encore une station spatiale, est une opération complexe et importante qui nécessite leur connexion temporaire ou permanente en orbite. L'amarrage peut être utilisé pour diverses opérations, telles que le transfert de carburant, la maintenance, la réparation ou même le lancement d'une mission conjointe.

Il existe différents systèmes permettant l'amarrage du satellite à un engin spatial.

Notamment, il est connu des systèmes d'amarrage mécaniques comprenant des bras mécaniques, des pinces ou des crochets pour amarrer les deux entités ensembles.

Il est également connu des systèmes d'amarrage magnétiques comprenant un couple d'aimants (amarrage passif) ou d'électroaimants (amarrage actif) disposés sur le satellite et l'engin spatial.

Lors de l'amarrage d'un satellite à un engin spatial, il est important de s'assurer que les deux objets sont correctement alignés et positionnés avant la connexion, afin d'éviter tout dommage ou tout risque de collision. Des systèmes de guidage et de navigation précis peuvent être utilisés pour aider à effectuer un amarrage en toute sécurité et de manière précise.

A cet effet, il existe deux types d'approches du satellite, les amarrages en boucle fermée et les amarrages en boucle ouverte.

Dans un amarrage en boucle fermée, les deux objets en orbite sont équipés de capteurs et de systèmes de contrôle qui permettent aux objets de s'aligner et de se connecter de manière autonome. Ces capteurs et systèmes de contrôle sont conçus pour détecter leurs mouvements respectifs, ainsi que pour effectuer des ajustements précis afin de maintenir une trajectoire d'approche stable. Ainsi, les amarrages en boucle fermée utilisent des solutions robotiques complexes et couteuses avec un haut niveau d'intelligence embarquée.

Dans un amarrage en boucle ouverte, les objets en orbite sont guidés manuellement par des opérateurs au sol. Les opérateurs utilisent des données de télémétrie et des images pour surveiller l'approche des objets et effectuer des ajustements pour s'assurer que les objets sont correctement alignés avant de les connecter. Bien que les solutions en boucle ouverte soient moins coûteuses, elles impliquent souvent un grand nombre de pièces, dégradant la simplicité et la fiabilité de l'opération. Par ailleurs, les cinématiques d'amarrage dans ce cadre présentent une rapidité très élevée et sont asservies à une synchronisation très bien exécutée du satellite et de l'engin spatial. Enfin, ces solutions impliquent souvent des problèmes de tribologie dans le temps qui dégradent le succès de l'amarrage.

Il y a donc un besoin pour un dispositif d'amarrage simple et fiable dans le temps, notamment dans le cadre d'une approche ouverte.

A cet effet, l'invention concerne un dispositif d'amarrage spatial comprenant une structure d'accueil d'un engin spatial à amarrer, ladite structure d'accueil comprenant un système d'attache magnétique réversible, le système d'attache réversible comprenant une ventouse magnétique d'amarrage comprenant une première partie destinée à être portée par l'engin spatial à amarrer et une deuxième partie portée par la structure d'accueil, dans lequel ladite structure d'accueil comprend également une base, un module d'accueil et un système de liaison élastique entre la base et le module d'accueil, le module d'accueil portant la deuxième partie de la ventouse, le module d'accueil et la base étant disposés en regard l'un de l'autre, et le système réversible d'attache magnétique étant configuré pour permettre le rapprochement et l'éloignement entre la base et le module d'accueil.

La structure d'accueil du dispositif d'amarrage selon l'invention permet avantageusement d'obtenir un autoalignement entre le module d'accueil et l'engin spatial à amarrer grâce à l'association du système de liaison élastique et du système réversible d'attache magnétique. Le dispositif d'amarrage est donc particulièrement adapté aux approches ouvertes et permet de compenser des erreurs des jugements des opérateurs au sol, et également des vitesses relatives (translations et rotations) entre les deux engins spatiaux.

La structure d'accueil permet également de générer un effort de répulsion permettant d'assister la libération de l'engin spatial à amarrer.

Par « engin spatial », il est entendu dans l'invention un satellite, un vaisseau spatial ou une station spatiale.

Suivant d'autres aspects avantageux de l'invention, le dispositif d'amarrage spatial comprend une ou plusieurs des caractéristiques suivantes, prises isolément ou en toutes combinaisons techniquement possibles :
- le système réversible d'attache magnétique comprend en outre au moins une ventouse magnétique de gerbage de la base et du module d'accueil, ladite au moins une ventouse magnétique de gerbage comprenant une partie inférieure fixée à la base et une partie supérieure fixé au module d'accueil ;
- la au moins une ventouse magnétique de gerbage comprend une partie activable et une partie passive correspondant chacune à la partie supérieure ou la partie inférieure, de préférence la partie activable correspond à la partie inférieure ;
- la partie activable est un électroaimant comprenant un cœur constitué par un matériau ferromagnétique doux et/ou un matériau ferromagnétique dur entouré par au moins une bobine électrique, et la partie passive constitué par un matériau ferromagnétique doux et/ou un matériau ferromagnétique dur ;
- le système de liaison est configuré pour permettre au moins un degré de liberté aux mouvements du module d'accueil, de préférence le système de liaison est configuré pour permettre six degrés de liberté aux mouvements du module d'accueil ;
- le système de liaison comprend au moins un organe élastique réversible fixé à la base et au module d'accueil ;
- la base et le module d'accueil s'étendent dans des plans parallèles entre eux et dans lequel ledit au moins un organe élastique réversible s'étend dans un plan parallèle auxdits plans ;
- la structure d'accueil comprend en outre un système de restriction des mouvements du module d'accueil ;
- le dispositif d'amarrage spatial comprend un système amortisseur fixé à la base.

L'invention concerne en outre un engin spatial amarreur comprenant un dispositif d'amarrage spatial tel que défini ci-dessus.

### Brève description des figures

L'invention sera mieux comprise à la lecture de la description qui va suivre donnée uniquement à titre d'exemple et faite en se référant aux dessins annexés dans lesquels :
- [Fig. 1] la figure 1 représente une vue isométrique d'un engin spatial à amarrer et d'un dispositif d'amarrage spatial selon l'invention porté par un engin spatial amarreur. La flèche représente la direction du mouvement de l'engin spatial à amarrer.
- [Fig. 2] la figure 2 représente deux vues isométriques (A et B) d'un dispositif d'amarrage spatial selon un premier mode de réalisation de l'invention. La figure 2A est une vue isométrique de dessus et la figure 2B est une vue isométrique dessous.
- [Fig. 3] la figure 3 représente une cinématique d'attachement entre une base et un module d'accueil du dispositif d'amarrage selon la figure 2.
- [Fig. 4] la figure 4 représente une première configuration d'une ventouse magnétique d'un dispositif d'amarrage spatial selon l'invention. La ventouse magnétique comprend deux parties. Chaque flèche représente le moment magnétique généré par une partie de la ventouse magnétique.
- [Fig. 5] la figure 5 représente une deuxième configuration d'une ventouse magnétique d'un dispositif d'amarrage spatial selon l'invention. La ventouse magnétique comprend deux parties. Chaque flèche représente le moment magnétique généré par une partie de la ventouse magnétique. Une flèche en tirets indique que l'émission d'un champ magnétique par la partie est optionnelle.
- [Fig. 6] la figure 6 représente une troisième configuration d'une ventouse magnétique d'un dispositif d'amarrage spatial selon l'invention. La ventouse magnétique comprend deux parties. Chaque flèche représente le moment magnétique généré par une partie de la ventouse magnétique.
- [Fig. 7] la figure 7 représente une vue en coupe d'un organe élastique réversible d'un dispositif d'amarrage spatial selon l'invention.
- [Fig. 8] la figure 8 représente une vue isométrique d'un dispositif d'amarrage selon un deuxième mode de réalisation de l'invention.
- [Fig. 9] la figure 9 représente une vue isométrique d'un dispositif d'amarrage selon un troisième mode de réalisation de l'invention.
- [Fig. 10] la figure 10 représente une vue isométrique d'un dispositif d'amarrage selon un quatrième mode de réalisation de l'invention.
- [Fig. 11] la figure 11 représente le dispositif d'amarrage spatial selon la figure 2 comprenant un système de restriction selon un première mode de réalisation.
- [Fig. 12] la figure 12 représente le dispositif d'amarrage spatial selon la figure 2 comprenant un système de restriction selon un deuxième mode de réalisation.
- [Fig. 13] la figure 13 représente le dispositif d'amarrage spatial selon la figure 2 comprenant un système de restriction selon un troisième mode de réalisation.
- [Fig. 14] la figure 14 représente une vue isométrique d'un système de réduction des torseurs de chocs d'un dispositif d'amarrage spatial selon un premier mode de réalisation.
- [Fig. 15] la figure 15 représente une vue isométrique d'un système amortisseur d'un dispositif d'amarrage spatial selon un deuxième mode de réalisation.
- [Fig. 16] la figure 16 représente une vue isométrique du dispositif d'amarrage selon la figure 2 comprenant en outre le système amortisseur selon la figure 14.
- [Fig. 17] la figure 17 représente une cinétique d'amarrage et d'appareillage d'un dispositif d'amarrage spatial selon l'invention avec un engin spatial. Les flèches blanches représentent des moments magnétiques. Les éclairs en gris clair représentent des attractions. Les éclairs en gris foncé représentent des répulsions. Les flèches en contour en pointillé représentent des étapes optionnelles.

### Description détaillée de l'invention

Les réalisations suivantes sont des exemples. Bien que la description se réfère à un ou plusieurs modes de réalisations, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou inter-changées pour fournir d'autres modes de réalisation.

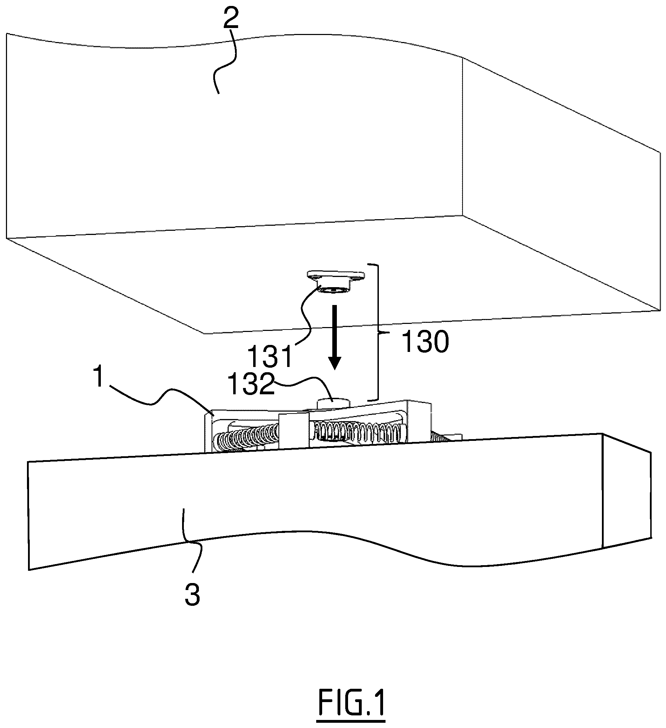

L'invention se rapporte à un dispositif d'amarrage spatial 1 d'un engin spatial à amarrer 2. La figure 1 illustre une approche d'un engin spatial à amarrer 2 en direction d'un dispositif d'amarrage 1 fixé à un engin spatial amarreur 3. L'engin spatial à amarrer 2 est notamment un satellite ou un vaisseau. L'engin spatial amarreur 3 est notamment une station spatiale, un satellite ou encore un vaisseau.

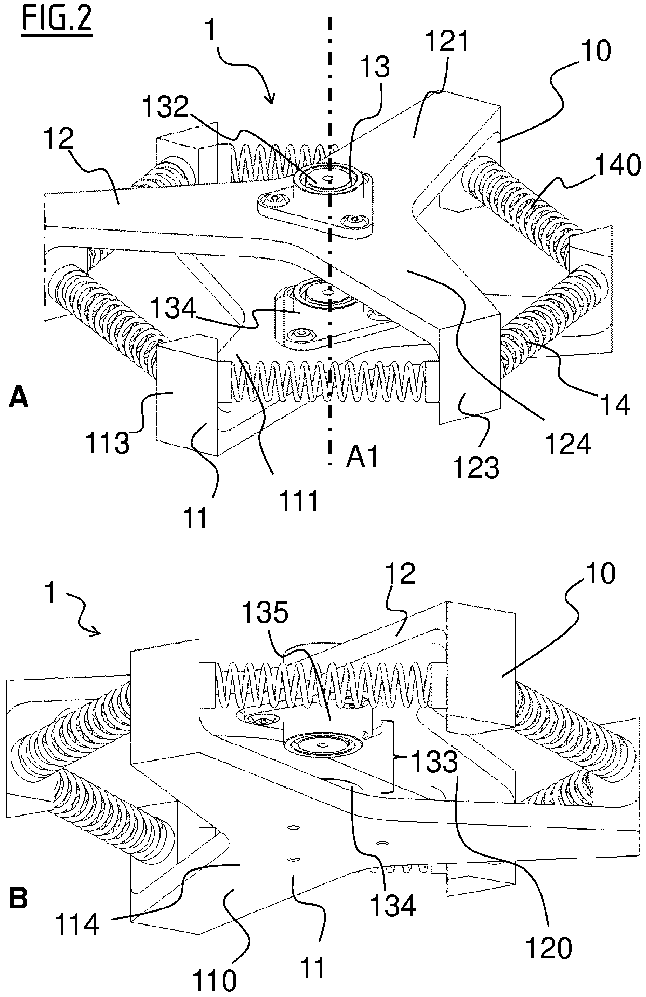

On se tournera vers la figure 2 qui illustre un premier mode de réalisation du dispositif d'amarrage 1 selon l'invention.

Le dispositif d'amarrage spatial 1 comprend une structure d'accueil 10 destiné à entrer en contact avec l'engin spatial à amarrer et à s'y fixer. La structure d'accueil 10 comprend une base 11 et un module d'accueil 12 qui se font face. La base 11 et le module d'accueil 12 s'étendent notamment dans des plans parallèles entre eux. La base 11 et le module d'accueil 12 comprennent chacun une surface inférieure 110, 120, et une surface supérieure 111, 121, opposées respectivement entre elles. La surface supérieure 111 de la base 11 fait face à la surface inférieure 120 du module d'accueil 12. La surface supérieure 121 du module d'accueil est destinée à faire face à l'espace, et la base 11 est destinée à être fixée directement ou indirectement via sa surface inférieure 110 à l'engin spatial amarreur 3.

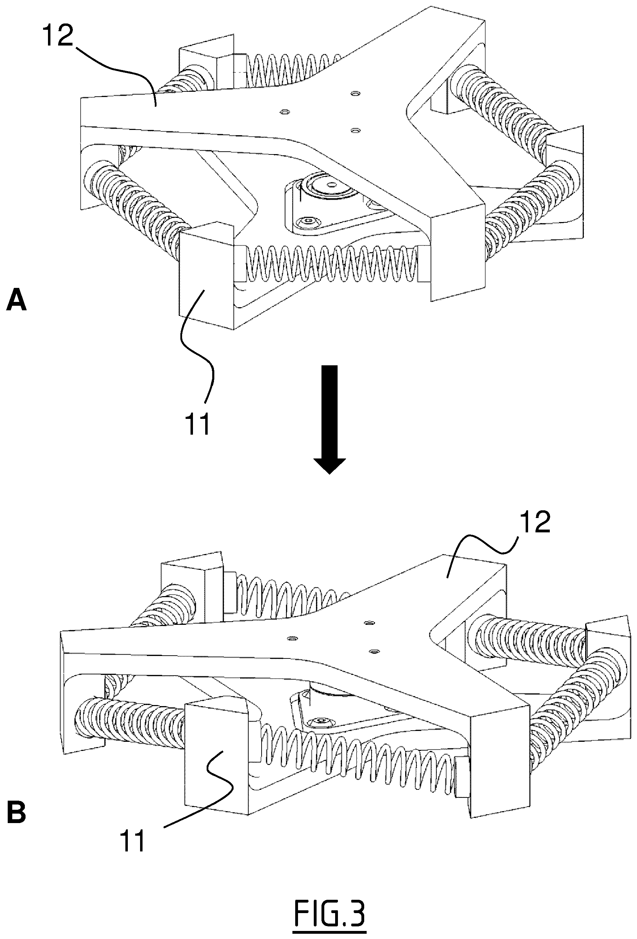

Le module d'accueil 12 a pour fonction première de se fixer de manière réversible à l'engin spatial à amarrer 2. En outre, le module d'accueil 12 comprend une position de repos dans laquelle il est éloigné de la base 11 (figure 3A) et une position d'attache dans laquelle il est attaché à la base 11 (figure 3B). Aux fins de ces deux aspects, la structure d'accueil 10 comprend un système d'attache magnétique réversible 13 configuré d'une part pour permettre la fixation et l'éloignement du module d'accueil 12 par rapport à l'engin spatial à amarrer 2 et d'autre part pour permettre la fixation et l'éloignement du module d'accueil 12 par rapport à la base 11.

Pour permettre la fixation et l'éloignement du module d'accueil 12 par rapport à l'engin spatial à amarrer 2, le système d'attache magnétique réversible 13 peut notamment comprendre au moins une ventouse magnétique d'amarrage 130, par exemple trois ventouses magnétiques d'amarrage 130. Lorsque plusieurs ventouses 130 sont présentes, elles sont notamment disposées selon un cercle centré sur un axe A1 passant par le centre géométrique de la base 11 et du module d'accueil 12. Lorsqu'une seule ventouse 130 est présente, elle est en particulier arrangée le long de l'axe A1, comme représenté en figure 2. La ventouse magnétique d'amarrage 130 ou chaque ventouse magnétique d'amarrage 130 comprend deux parties, à savoir une première partie 131 portée par l'engin spatial 2 (visible sur la figure 1), et une seconde partie 132 portée par le module d'accueil 12. La seconde partie 132 est notamment fixée à la surface supérieure 120 du module d'accueil 12. En particulier, la seconde partie 132 est fixée au niveau du centre de la surface supérieure 120. La première partie 131 est quant à elle disposée au niveau de la surface de l'engin spatial à amarrer 2, notamment tel que représenté en figure 1.

Pour permettre la fixation et l'éloignement du module d'accueil 12 par rapport à la base 11, le système d'attache magnétique réversible 13 peut notamment comprendre au moins une ventouse magnétique de gerbage 133, par exemple trois ventouses magnétiques de gerbage 133. A l'image des ventouses d'amarrage 130, lorsque plusieurs ventouses de gerbage 133 sont présentes, elles sont notamment disposées selon un cercle centré sur l'axe A1. De même, lorsqu'une seule ventouse de gerbage 133 est présente, elle est en particulier arrangée au niveau de l'axe A1, comme représenté en figure 2. La ventouse de gerbage 133 ou chaque ventouse magnétique de gerbage 133 comprend elle aussi deux parties, à savoir une partie inférieure 134 portée par la base 11 et une partie supérieure 135 portée par le module d'accueil 12. La partie inférieure et la partie supérieure 134, 135 sont disposées en regard l'une de l'autre. Notamment, la partie inférieure 134 est fixée à la surface supérieure 111 de la base 11 et la partie supérieure 135 est fixée à la surface inférieure 120 du module d'accueil 12. En particulier, la partie inférieure 134 et la partie supérieure 135 sont disposées respectivement au niveau du centre de la surface 110, 121 où elles sont fixées.

Ladite au moins une ventouse magnétique d'amarrage 130 et ladite au moins une ventouse de gerbage 133 comprennent chacune une partie dite « passive » P et une partie dite « activable » A, qui peuvent correspondre au choix à l'une ou l'autre de leurs parties respectives. Selon un mode de réalisation préférée, la partie passive P de ladite au moins une ventouse d'amarrage 130 correspond à la première partie 131 et la partie activable A de ladite au moins une ventouse d'amarrage 130 correspond à la seconde partie 132. Selon un mode de réalisation préféré, la partie activable A de ladite au moins une ventouse de gerbage 133 correspond à la partie inférieure 134, permettant en outre une simplification des câblages électriques.

La partie passive P peut comprendre un matériau ferromagnétique doux et/ou un matériau ferromagnétique dur.

Par « matériau ferromagnétique doux », il est entendu dans l'invention un matériau ferromagnétique présentant une aimantation rémanente et un champ coercitif faibles, c'est-à-dire ne permettant pas l'attraction de l'autre partie de la ventouse. Par opposition, un « matériau ferromagnétique dur » présente une aimantation rémanente et un champ coercitif forts, c'est-à-dire permettant l'attraction de l'autre partie de la ventouse, tel qu'un aimant permanent.

La partie activable A peut notamment être un électroaimant comprenant un cœur en matériau ferromagnétique entouré par au moins une bobine électrique. Lorsque plusieurs bobines sont présentes, elles peuvent avoir un même sens d'enroulement ou un sens d'enroulement contraire. Le cœur ferromagnétique peut comprendre un matériau ferromagnétique doux et/ou un matériau ferromagnétique dur.

La partie passive P peut donc avoir une fonction d'attraction magnétique ou bien être attirée par le champ magnétique généré par la partie activable A, mais ne peut pas changer son état. A l'inverse, la partie activable A présente au moins une fonction « activable » qui permet de générer un champ magnétique et donc de changer son état. Dans le cadre d'un électroaimant, cette fonction est notamment déclenchée par l'injection d'un courant électrique dans ladite au moins une bobine électrique. La partie activable A peut comprendre deux fonctions activables, chacune générant un champ magnétique avec un moment magnétique opposé.

Selon un mode de réalisation de l'invention, lorsque les parties passives P et/ou les parties activables A de la ventouse d'amarrage 130 et de la ventouse de gerbage 133 sont ou comprennent un matériau ferromagnétique dur, leur moment magnétique respectif est dans la même direction afin de ne pas perturber les forces magnétiques d'attraction et de répulsion des ventouses 130, 133 entre elles.

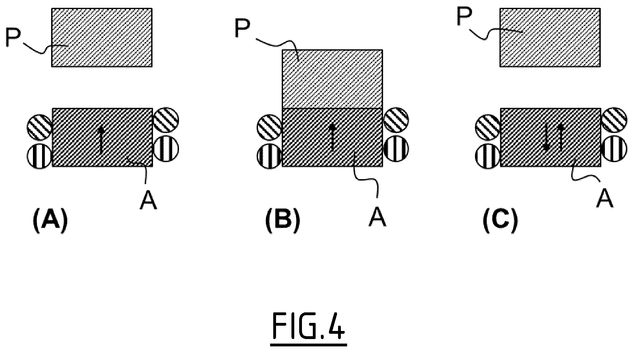

L'activation de la ou d'une des fonctions de la partie activable A peut être configurée pour permettre au choix une attraction ou une répulsion de la partie passive P. Les figures 4 à 6 illustrent différentes combinaisons de partie activable et passive et une manière dont l'attraction et la répulsion peut être opérée dans une ventouse, qui peut être la ventouse d'amarrage 130 ou bien la ventouse de gerbage 133. Sur ces différentes figures, il est représenté un état initial séparé où la partie activable A n'est pas activée (A), un état de fixation magnétique entre les deux parties A, P (B), et un état de séparation de ces deux parties A, P (C). Sur les différentes figures, la partie passive P est représentée en haut, et la partie activable A en bas. La partie activable A est un électroaimant comprenant un cœur ferromagnétique entouré par une bobine.

La figure 4 illustre une configuration où la partie passive P est en matériau ferromagnétique doux, et la partie activable A comprend un cœur ferromagnétique dur. Ainsi, le passage de l'état initial séparé (A) à l'état fixé (B) est réalisé passivement par l'attraction de la partie passive P par la partie activable A. La séparation subséquente (C) est réalisée par l'activation de la partie activable A, et l'injection d'un courant électrique dans la bobine de l'électroaimant permettant d'émettre un champ magnétique avec un moment magnétique égal à celui du champ magnétique émis par le cœur ferromagnétique mais de sens inverse. La force d'attraction du cœur ferromagnétique est ainsi annulée et la partie passive P se sépare de la partie activable A passivement.

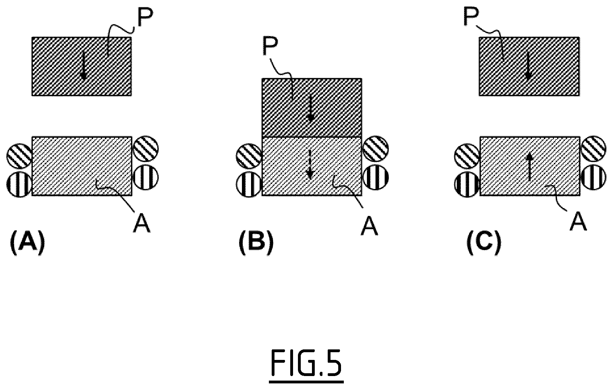

La figure 5 illustre une deuxième configuration dans laquelle la partie passive est en matériau ferromagnétique dur, et la partie activable comprend un cœur ferromagnétique doux. Le passage de l'état initial séparé (A) à l'état fixé (B) est réalisé passivement par l'attraction de la partie activable A par la partie passive P. Cette attraction peut être augmentée par l'activation d'une première fonction de la partie activable A et l'injection d'un courant électrique dans la bobine de l'électroaimant permettant de générer un champ magnétique avec un moment magnétique de même sens que celui de la partie passive P. La séparation subséquente (C) peut elle être réalisée par une activation d'une seconde fonction de la partie activable A et l'injection d'un courant électrique de sens contraire entraînant la génération d'un champ magnétique avec un moment magnétique de sens contraire à celui de la partie passive P. Bien entendu, l'intensité du champ magnétique généré par la partie activable doit ici être supérieure ou égal à celle du champ magnétique généré par la partie passive pour permettre une répulsion entre les deux parties A, P.

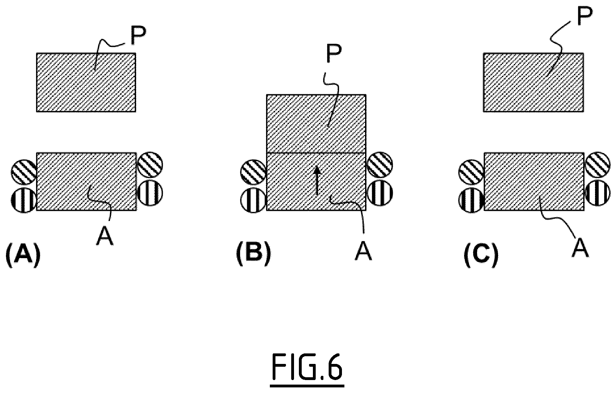

La figure 6 illustre une troisième configuration dans laquelle la partie passive P est en matériau ferromagnétique doux, et la partie activable A comprend un cœur également en matériau ferromagnétique doux. Ainsi, à l'état initial (A), aucune attraction ou répulsion n'a lieu entre les deux parties A, P. Le passage de l'état initial séparé (A) à l'état fixé (B) est réalisé par l'activation de la partie activable et l'injection d'un courant électrique dans la bobine de l'électroaimant afin de générer un champ magnétique. Le sens du moment magnétique du champ magnétique généré n'a pas d'importance pour obtenir une attraction de la partie passive P. La séparation subséquente (C) est réalisée par l'arrêt de l'activation de la partie activable A.

En retournant sur la figure 2, on peut voir que la structure d'accueil 10 comprend en outre un système de liaison élastique 14 entre la base 11 et le module d'accueil 12 notamment configuré pour:
- maintenir le module d'accueil 12 dans sa position de repos,
- permettre au moins un degré de liberté de déplacement du module d'accueil 12, ledit degré de liberté correspondant au moins à une translation vers et depuis la base 11, et
- apporter une limite de débattement dans les déplacements du module d'accueil 12.

Le module d'accueil 12 présente ainsi une certaine liberté de mouvement par rapport à la base 11 lorsqu'il est dans sa position de repos. Cette position de repos est bien entendu adaptée pour éviter une attraction passive des parties supérieure et inférieure 134, 135 de la ventouse de gerbage 133.

De par la liberté de mouvement donné au module d'accueil 12, le système de liaison élastique 14 permet notamment d'obtenir un autoalignement entre le module d'accueil 12 et l'engin spatial 2. En effet, grâce aux propriétés élastiques du système de liaison 40, le module d'accueil 12 peut être déplacé relativement par rapport à la base 11 lors de l'amarrage avec l'engin spatial 2 puis être ramené à sa position initiale de repos en étant fixé à ce dernier. Ce déplacement permet de corriger dans une certaine mesure un mauvais alignement des parties 131, 132 de la ventouse d'amarrage 130.

Le système de liaison élastique 14 est notamment configuré pour permettre plusieurs degrés de liberté dans les déplacements du module d'accueil 12, permettant d'accroitre les capacités d'autoalignement. En particulier, le système de liaison élastique 14 est configuré pour permettre deux, trois, quatre, cinq voire six degrés de liberté. Avec six degrés de liberté, le système de liaison élastique 14 permet d'autoriser des déplacements dans toutes les directions et assurer un autoalignement du module d'accueil 12 avec l'engin spatial à amarrer 2 dans toutes les directions.

Le système de liaison élastique 14 peut comprendre au moins un organe élastique réversible 140 présentant des propriétés élastiques ou viscoélastiques. Ledit organe élastique réversible 140 est notamment un ressort hélicoïdal tel que représenté en figure 2, ou bien dans un matériau élastomère. L'allongement des organes réversibles 140 permet d'autoriser un déplacement du module d'accueil 12 dans la direction d'allongement limité par les contraintes élastiques qui s'appliquent. Les organes réversibles 140 s'étirent ainsi pour réguler les désalignements de la base 11 et du module d'accueil 12. Selon un mode de réalisation préféré, ledit au moins un organe élastique 140 s'étend perpendiculairement à l'axe d'attraction A1. Cette disposition permet d'obtenir le maximum de degrés de liberté, six, dans les déplacements du module d'accueil 12 avec un encombrement minimal.

Le système de liaison élastique 14 peut comprendre notamment au moins un câble 141 reliant la base 11 et le module d'accueil 12, permettant ainsi de limiter les déplacements du module d'accueil 12. Ledit au moins un câble 141 permet d'éviter notamment un étirement de rupture dudit au moins un organe réversible 141. Il permet également d'appliquer une précontrainte de compression dudit organe élastique réversible 140.

Le système de liaison élastique 14 peut également comprendre au moins un amortisseur, notamment couplé à chaque organe élastique réversible 140, afin d'absorber au moins une partie du choc.

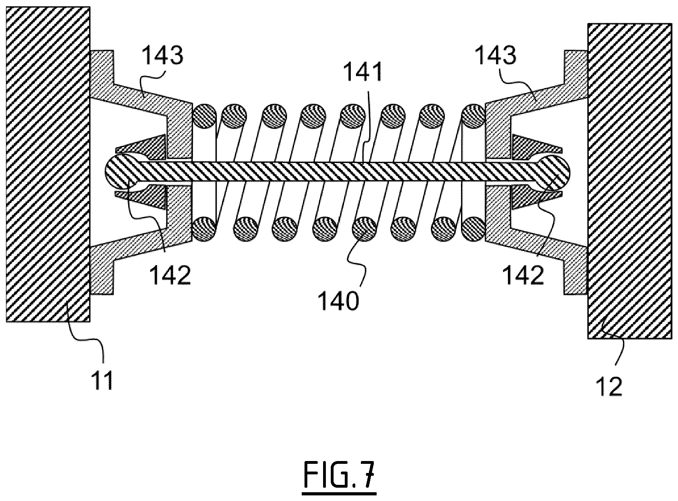

Selon un mode de réalisation particulier, ledit au moins un câble 141 est disposé au centre d'un ressort hélicoïdal 140, comme représenté en figure 7. Le câble 141 comprend notamment deux têtes 142 opposées enserrées chacune dans un logement 143 dont l'un est fixé à la base 11 et l'autre au module d'accueil 12. Le ressort 140 prend appui sur chaque logement 143. Chaque logement 143 peut comprendre une ouverture au travers de laquelle coulisse le câble 141 lorsque le ressort 140 se contracte ou se détend. Alternativement ou de manière complémentaire, le corps du câble 141 présente une flexibilité adaptée pour pouvoir être déformé lorsque le ressort 140 se contracte. Les têtes 142 peuvent comprendre un jeu dans chaque logement 143 permettant un éloignement de ces derniers par la détente du ressort 140.

Le module d'accueil 12 et la base 11 peuvent notamment comprendre chacun des organes de fixation 113, 123 des différents éléments du système de liaison élastique 14. Lesdits organes de fixation 113, 123 sont notamment disposés au niveau des bords périphériques du module d'accueil 12 et de la base 11 afin d'assurer un débattement maximal pour chaque degré de liberté, et ainsi permettre une plus grande souplesse dans l'autoalignement avec l'engin spatial à amarrer 2.

La forme de la base 11 et du module d'accueil 12 peut également être configurée pour minimiser leur encombrement. A cet effet, la base 11 et le module d'accueil 12 peuvent présenter une forme identique présentant une symétrie de centre, c'est-à-dire que leur centre de gravité correspond à leur centre de symétrie. Le centre de symétrie respectif de la base 11 et celui du module d'accueil 12 sont disposés l'un au-dessus de l'autre. En particulier, la base 11 et le module d'accueil 12 sont disposés décalés angulairement autour de leur axe de symétrie respectif.

Notamment les parties 134, 135 de la ventouse de gerbage 133 sont disposées de sorte que l'axe A1 passe par l'axe de symétrie respectif de la base 11 et du module d'accueil 12. Ainsi, la base 11 et le module d'accueil 12 sont disposés décalés en rotation selon l'axe A1, comme représenté en figure 2.

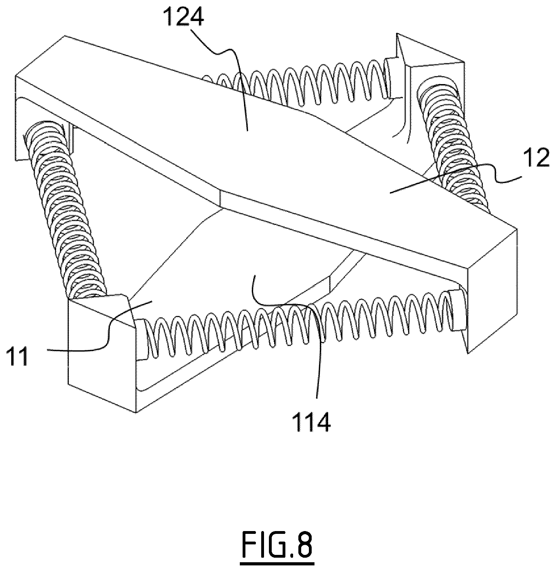

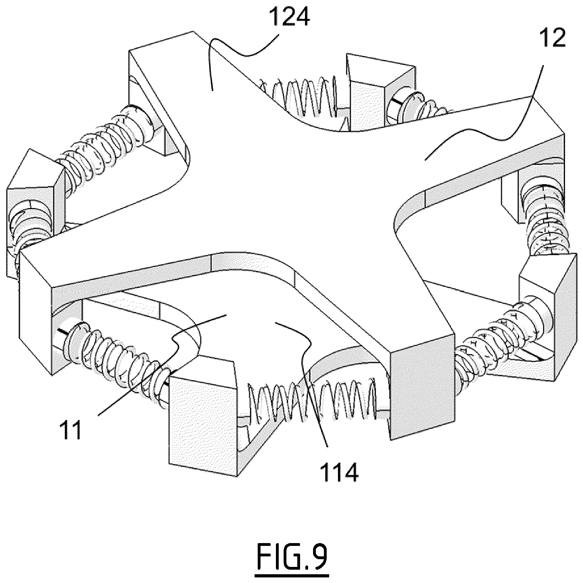

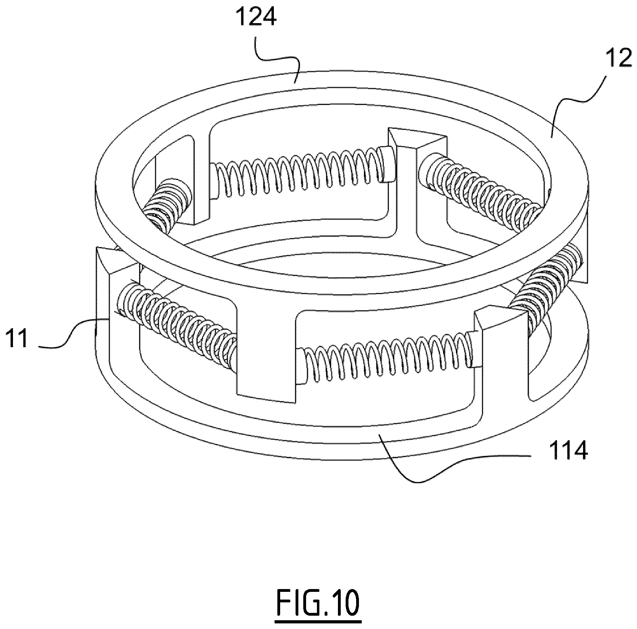

Selon un mode de réalisation représenté en figure 2, la base 11 et le module d'accueil 12 comprennent chacun un corps 114, 124 sous la forme d'au moins deux extensions s'étendant depuis un axe de symétrie. Ainsi, les corps 114, 124 de la base 11 et du module d'accueil 12 peut comprendre deux extensions (figure 8), trois extensions (figure 2), quatre extensions (figure 9) ou plus. Selon un autre mode de réalisation, la base 11 et le module d'accueil 12 comprennent chacun un corps 114, 124 présentant une forme creuse, notamment sous la forme d'un disque creux (figure 10). Une telle forme permet notamment de loger du matériel en son sein, par exemple des prises électriques ou fluidiques pour la connexion ou le ravitaillement entre les deux engins spatiaux. Le corps 114, 124 de la base 11 et du module d'accueil 12 s'étendent notamment dans des plans parallèles entre eux.

Les organes de fixation 113, 123 se présentent notamment sous la forme de protrusions s'étendant perpendiculairement aux plans dans lesquels se trouvent les corps 114, 124 de la base 11 et du module d'accueil 12, en particulier en direction de l'élément auquel ils n'appartiennent pas. Notamment, les organes de fixation 113, 123 sont disposés au niveau d'au moins une des extensions du corps 114, 124 de la base 11 et du module d'accueil 12, en particulier de chaque extension. Ainsi la base 11 et le module d'accueil 12 présentent une forme identique mais retournée l'une par rapport à l'autre, comme représenté en figure 2.

Afin de limiter le déplacement du module d'accueil 12 selon un ou plusieurs degrés de liberté, la structure d'accueil 10 peut comprendre, en plus du système de liaison élastique 14, un système de restriction 15 des mouvements du module d'accueil 12. Ledit système de restriction 15 comprend notamment au moins une butée. Notamment, le système de restriction 15 peut comprendre :
- au moins une butée latérale 150 configurée pour limiter un déplacement latéral du module d'accueil 12 par rapport à l'axe A1, et/ou
- au moins une butée supérieure 151 configurée pour limiter un éloignement du module d'accueil 12 selon l'axe A1 par rapport à la base 11, et/ou
- au moins une butée absolue 152 configurée pour limiter le déplacement du module d'accueil selon toutes les directions.

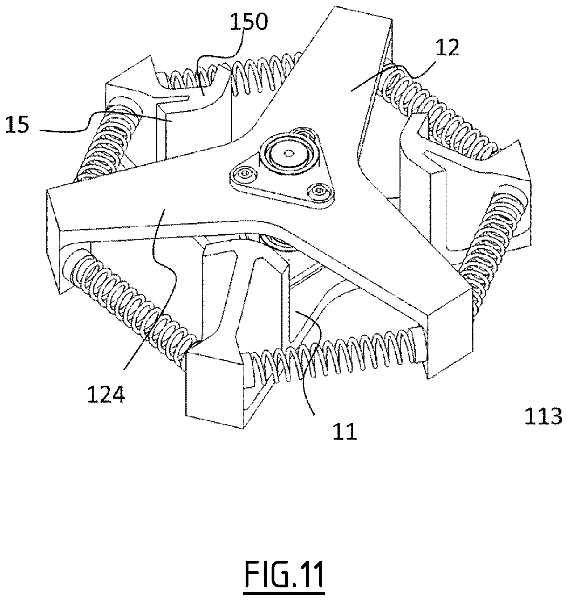

Ladite au moins une butée latérale 150 est notamment fixée ou venue de matière avec la base 11, comme représenté en figure 11, ou le module d'accueil 12. En particulier, elle peut correspondre à une saillie du corps 114, 124 de la base 11 ou du module d'accueil 12 s'étendant au moins jusqu'à hauteur du corps 114, 124 de l'autre. Notamment, comme représenté sur la figure 11, ladite au moins une butée 15 latérale peut être disposée entre deux extensions du corps 124 du module d'accueil 12, ou bien entre deux extensions du corps 114 de la base 11.

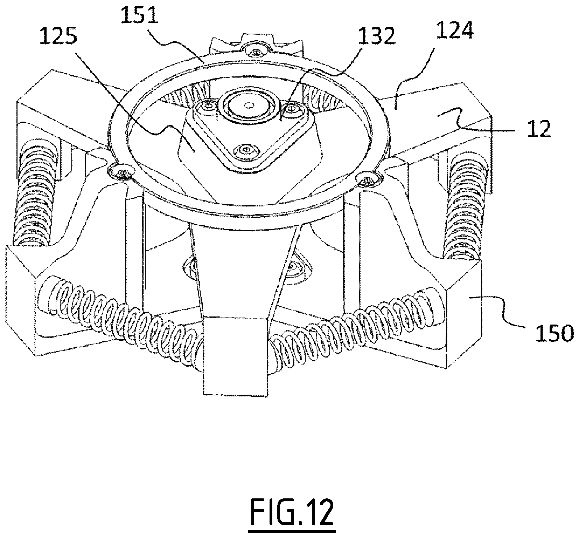

Ladite au moins une butée supérieure 151 peut notamment se présenter sous la forme d'un cylindre creux disposé contre ou à proximité de la surface supérieure 121 du module d'accueil 12. En particulier, ladite butée 151 encercle la seconde partie 132 de la ventouse d'amarrage 130. La seconde partie 132 peut notamment être surélevée par rapport à la surface supérieure 124 du module d'accueil 124 par une saillie 125. Ces deux dernières configurations permettent également de limiter le déplacement latéral du module d'accueil 12 par contact entre la butée 151 et la saillie 125 ou la seconde partie 132. Ladite au moins une butée supérieure 151 peut notamment être fixée ou venue de matière avec ladite au moins une butée latérale 150 décrite ci-avant, comme représenté en figure 12.

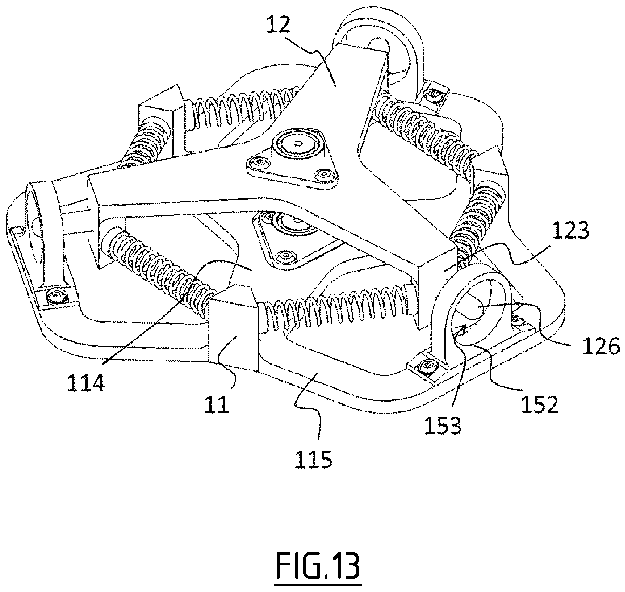

Ladite au moins une butée absolue 152 comprend notamment une ouverture 153, notamment circulaire, dont l'axe central est disposé parallèlement au plan dans lequel s'étend le module d'accueil 12. La butée absolue 152 peut être portée par la base 11 ou le module d'accueil 12. Pour la coopération avec l'ouverture 153, le module d'accueil 12 ou la base 11, en fonction de l'élément portant ladite ouverture 153, peut comprendre un doigt 126 disposé dans l'ouverture 153. Le doigt 126 est notamment disposé au centre de l'ouverture 153 dans la position de repos du module d'accueil 12. Bien entendu, l'ouverture 153 est dimensionnée pour ne pas entraver l'attache des deux parties 134, 135 de la ventouse de gerbage 133. Ladite butée absolue 152 est fixée ou venue de matière avec la base 11, notamment avec des extensions 115 s'étendant depuis le corps 114 de la base 11. Comme représenté en figure 13, ledit doigt 126 peut être fixé ou venu de matière avec une extrémité d'une extension du corps 124 du module d'accueil 12, ou bien une extension du corps 114 de la base 11. La limite de déplacement selon une direction dans le prolongement du doigt 126 peut être assurée par le contact entre la butée absolue 152 et l'extrémité du corps 114, 124 portant le doigt 126. En particulier, le doigt 126 s'étend depuis un organe de fixation 113, 123 de la base 11 ou du module d'accueil 12.

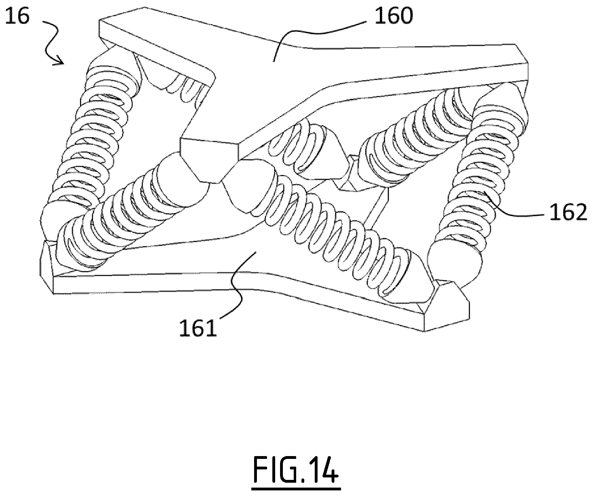

Selon un mode de réalisation de l'invention, le dispositif d'amarrage 1 peut comprendre en outre un système de réduction des torseurs de choc 16 fixée à la base 11 du système d'accueil 10, tel que représenté aux figures 14 à 16. Ledit système de réduction des torseurs de choc 16 est configuré pour minimiser le choc de l'amarrage.

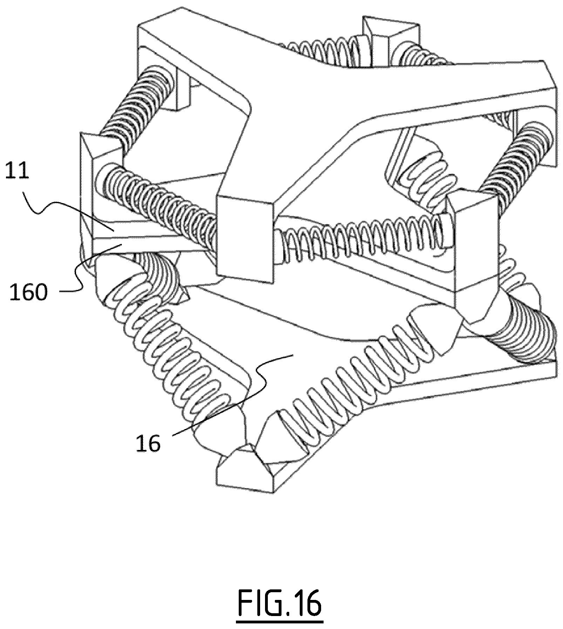

Ledit système amortisseur 16 peut comprendre une partie supérieure 160 fixée à la base 11 et une partie inférieure 161 destinée à être fixée à l'engin spatial amarreur 3. Selon un mode de réalisation de l'invention, la partie supérieure et la partie inférieure 160, 161 présentent la même forme, en particulier inversée l'une par rapport à l'autre. Selon un mode de réalisation, la forme de la partie supérieure 160, et optionnellement de la partie inférieure 161, est identique à celle du corps 113 de la base 11, comme représenté en figure 16. A l'image de la base 11 et du module d'accueil 12, la partie supérieure 160 et la partie inférieure 161 s'étendent dans des plans parallèles et peuvent être disposées décalé en rotation autour de leur axe de symétrie.

Afin d'absorber les efforts, le système de réduction des torseurs de choc 16 peut comprendre un amortisseur (non représenté) notamment couplé à au moins un organe élastique réversible 162 reliant la partie supérieure 160 et la partie inférieure 161. Ledit au moins un organe élastique réversible 162 correspondant notamment à l'organe élastique 140 décrit plus haut. Les propriétés élastiques des organes élastiques 162 sont bien entendues adaptées à leur fonction requise. On préfèrera ainsi que les organes élastiques 162 présentent une raideur supérieure aux organes élastiques 140. En effet, les organes élastiques 140 doivent pouvoir permettre un déplacement facile du module d'accueil 12 en direction de l'engin spatial à amarrer 2 pour corriger son positionnement, ce qui nécessite une certaine souplesse, alors que les organes élastiques 162 accompagnent des amortisseurs dans leur absorption du choc et doivent donc être plus rigides. En particulier, ledit au moins un organe élastique réversible 162 est pré-chargé à l'aide d'un câble (non représenté), comme décrit plus haut. Les organes élastiques réversibles sont notamment disposés avec un angle allant de 0 à 90 degrés, notamment de 30 à 70 degrés, en particulier de 45 degrés, par rapport aux plans dans lesquels s'étendent la partie inférieure 161 et la partie supérieure 160.

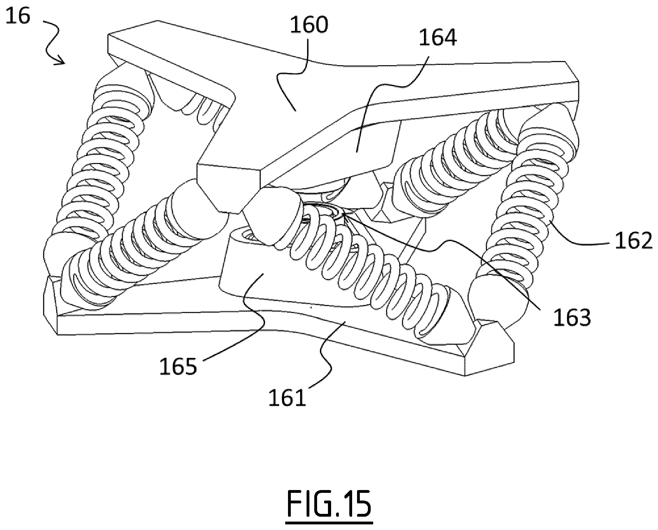

Selon un mode de réalisation représenté à la figure 15, le système amortisseur 16 peut comprendre une ventouse magnétique de fixation 163 comprenant une partie supérieure 164 et une partie inférieure 165 disposées en regard l'une de l'autre au niveau de la face inférieure de la partie supérieure 160 et de la face supérieure de la partie inférieure 161. A l'image des ventouses précédemment décrites, la ventouse magnétique de fixation 163 comprend une partie passive et une partie activable. La ventouse magnétique de fixation 163 a notamment pour rôle de maintenir la partie supérieure 160 et la partie inférieure 161 solidaires entre elles durant le trajet jusqu'à l'espace, afin d'éviter tout mouvement du dispositif d'amarrage 1 qui pourrait endommager ce dernier. Une fois que le dispositif d'amarrage 1 est déployé dans l'espace, la ventouse magnétique de fixation 163 est notamment configurée pour que la partie activable repousse la partie passive.

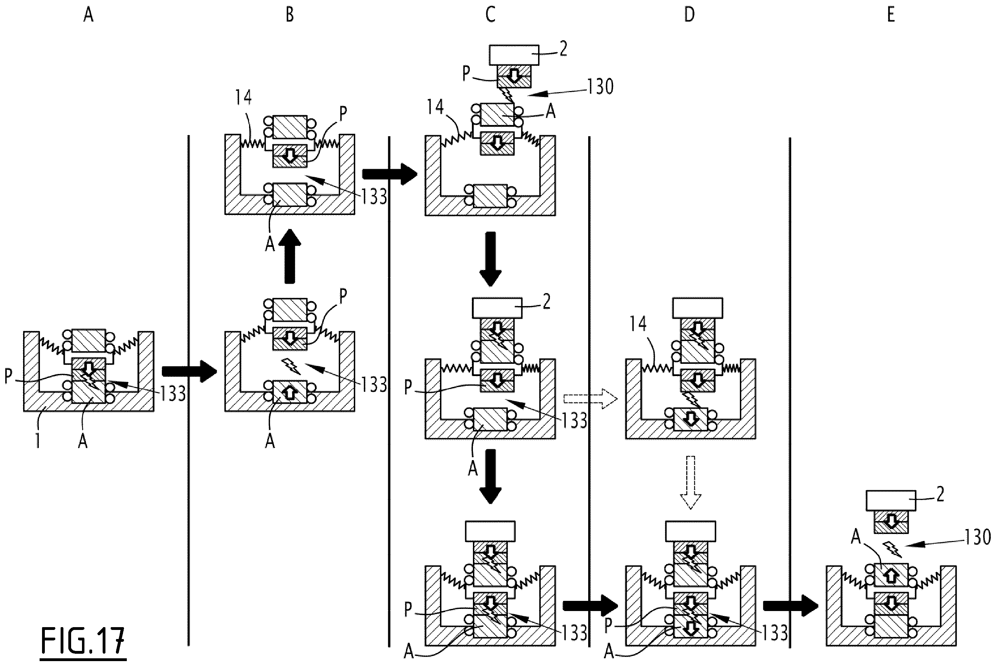

Il va maintenant être décrit à l'aide de la figure 17 un scénario d'amarrage et d'appareillage de l'engin spatial à amarrer 2 avec un dispositif d'amarrage 1 de l'invention comprenant une seule ventouse de gerbage 133 et une seule ventouse d'amarrage 130. La ventouse de gerbage 133 et la ventouse d'amarrage 130 reprennent dans cet exemple la configuration de la partie passive P et de la partie activable A représentée en figure 5. Pour la ventouse de gerbage 133, la partie activable A correspond à la partie inférieure 134, et pour la pour ventouse d'amarrage 130, la partie activable A correspond à la deuxième partie 132.

De par la combinaison des attractions respectives des deux ventouses 130, 133, l'amarrage de l'engin spatial 2 se déroule en deux parties : un amarrage intermédiaire par la fixation des deux parties 131, 132 de la ventouse d'amarrage 130, puis un amarrage final par la fixation subséquent des deux parties 134, 135 de la ventouse de gerbage 133. L'amarrage intermédiaire permet de capter l'engin spatial 2, par une liaison mobile et l'amarrage final permet d'obtenir une liaison statique robuste entre l'engin spatial amarreur 3 et l'engin spatial à amarrer 2 par une double fixation magnétique. Ainsi, la partie 132 de la ventouse d'amarrage 130 correspond à une cible pour l'engin spatial 2 pour sa fixation à l'engin spatial 3, qui a l'avantage de présenter une certaine mobilité permettant de corriger des erreurs de positionnement de l'engin spatial 2 à amarrer avant l'amarrage final qui ancre en position l'engin spatial 2.

La première étape représentée (A) correspond à l'état dans lequel se trouve le dispositif d'amarrage spatial 1 durant le vol spatial pour sa mise dans l'espace. Ici, les deux parties de la ventouse de gerbage 133 sont fixées l'une à l'autre de façon à éviter tout mouvement durant le trajet. Cette fixation se fait ici de manière passive comme il a été vu précédemment, et peut être augmentée par la première fonction d'activation de la partie activable A de la ventouse de gerbage 133. Cette fixation entraîne un effort sur le système de liaison élastique 14, et on peut apercevoir une déformation de ce dernier en direction de la partie activable A de la ventouse de gerbage 133.

La deuxième étape représentée (B) correspond au déploiement du dispositif d'amarrage 1. Dans la représentation qui fait suite à la première étape (A), la partie activable A de la ventouse de gerbage 133 est activée selon la seconde fonction de façon à repousser ou annuler l'effort d'attraction avec la partie passive P. Cette action a pour conséquence d'entraîner un effort sur le système de liaison élastique 14 qui relâche l'énergie emmagasinée dans la position précédente et participe à l'éloignement des deux parties P, A de la ventouse de gerbage 133. Ensuite, comme visible sur la représentation subséquente de l'étape (B), le système 14 se stabilise et maintient le module d'accueil 12 dans sa position de repos où les forces d'attraction de la partie passive P de la ventouse de gerbage 133 ne sont pas suffisantes pour permettre le rapprochement avec la partie activable A.

La troisième étape représentée (C) est l'attraction de l'engin spatial à amarrer 2 par la ventouse d'amarrage 130. Ainsi, dans la première représentation qui fait suite à l'étape (B), la partie passive P portée par l'engin spatial à amarrer 2 va attirer de manière passive la partie activable A portée de la ventouse d'amarrage. L'attraction entre les deux parties de la ventouse d'amarrage 130 peut être renforcée par l'activation de la première fonction de sa partie activable A. Cette attraction va entraîner une déformation du système de liaison élastique 14 en direction de l'engin spatial 2, guidant la partie activable A de la ventouse d'amarrage 130 vers la partie P. Ici, on peut voir un léger décalage entre les deux parties P, A de la ventouse d'amarrage 130. Un autoalignement sera possible de manière passive grâce à la souplesse du système de liaison 14, corrigeant ce décalage.

Suite à la fixation des deux parties de la ventouse d'amarrage 130, il est atteint l'amarrage intermédiaire, correspondant à la deuxième représentation de l'étape (C). Si l'engin spatial 2 continue sur sa lancée, il va déformer le système de liaison élastique 14 en direction de la partie activable A de la ventouse de gerbage 133. Si cette déformation est suffisante, la partie passive P de la ventouse de gerbage 133 va se retrouver à portée d'attraction de la partie activable A, entraînant ainsi la fixation des deux parties de la ventouse de gerbage 133 entre elles. On atteint alors directement l'amarrage final, correspondant à la troisième représentation de l'étape (C). Pour augmenter la fixation magnétique des deux parties P, A de la ventouse de gerbage 133, la première fonction de la partie activable A peut être activée.

La quatrième étape représentée (D) est optionnelle et représente le cas où la déformation du système de liaison élastique 14 en direction de la base n'a pas été suffisante pour permettre une attraction passive des deux parties de la ventouse de gerbage 133. Dans ce cas, la partie activable A de la ventouse de gerbage 133 est activé selon la première fonction afin d'augmenter les forces d'attraction mutuelles des deux parties P, A et ainsi permettre leur fixation magnétique. Il est alors atteint l'amarrage final. Comme il a été vu lors de l'étape (C), le décalage entre les parties P et A est régulé par l'attractivité de ces deux dernières et la flexibilité de mouvement du module d'accueil 12 de par le système de liaison élastique 14.

La cinquième étape représentée (E) correspond à l'appareillage de l'engin spatial 2 par l'activation de la seconde fonction de la partie activable A de la ventouse d'amarrage 130, entrainant la répulsion des deux parties de la ventouse d'amarrage 130.

## Revendications

1. Dispositif d'amarrage spatial (1) comprenant une structure d'accueil (10) d'un engin spatial à amarrer (2), ladite structure d'accueil (10) comprenant un système d'attache magnétique réversible (13), le système d'attache réversible (13) comprenant au moins une ventouse magnétique d'amarrage (130) comprenant une première partie (131) destinée à être portée par l'engin spatial à amarrer (2) et une deuxième partie (132) portée par la structure d'accueil (10), **caractérisé en ce que** ladite structure d'accueil (10) comprend également une base (11), un module d'accueil (12) et un système de liaison élastique (14) entre la base (11) et le module d'accueil (12),
le module d'accueil (12) portant la deuxième partie (132) de ladite au moins une ventouse, le module d'accueil (12) et la base (11) étant disposés en regard l'un de l'autre, et
le système réversible d'attache magnétique (13) étant configuré pour permettre le rapprochement et l'éloignement entre la base (11) et le module d'accueil

2. Dispositif d'amarrage (1) selon la revendication 1, **caractérisé en ce que** le système réversible d'attache magnétique (13) comprend en outre au moins une ventouse magnétique de gerbage (133) de la base (11) et du module d'accueil (12), ladite au moins une ventouse magnétique de gerbage (133) comprenant une partie inférieure (134) fixée à la base (11) et une partie supérieure (135) fixé au module d'accueil (12).

3. Dispositif d'amarrage selon la revendication 2, **caractérisé en ce que** ladite au moins une ventouse magnétique de gerbage (133) comprend une partie activable (A) et une partie passive (P) correspondant chacune à la partie supérieure (135) ou la partie inférieure (134), de préférence la partie activable (A) correspond à la partie inférieure (134).

4. Dispositif d'amarrage (1) selon la revendication 3, **caractérisé en ce que** la partie activable (A) est un électroaimant comprenant un cœur constitué par un matériau ferromagnétique doux et/ou un matériau ferromagnétique dur entouré par au moins une bobine électrique, et la partie passive (P) constitué par un matériau ferromagnétique doux et/ou un matériau ferromagnétique dur.

5. Dispositif d'amarrage (1) selon l'une des revendications 1 à 4, **caractérisé en ce que** le système de liaison (14) est configuré pour permettre au moins un degré de liberté aux mouvements du module d'accueil (12), de préférence le système de liaison (14) est configuré pour permettre six degrés de liberté aux mouvements du module d'accueil (12).

6. Dispositif d'amarrage (1) selon l'une des revendications 1 à 5, **caractérisé en ce que** le système de liaison (14) comprend au moins un organe élastique réversible (140) fixé à la base (11) et au module d'accueil (12).

7. Dispositif d'amarrage (1) selon la revendication 6, dans lequel la base (11) et le module d'accueil (12) s'étendent dans des plans parallèles entre eux et dans lequel ledit au moins un organe élastique réversible (140) s'étend dans un plan parallèle auxdits plans.

8. Dispositif d'amarrage (1) selon l'une des revendications 1 à 7, dans lequel la structure d'accueil (10) comprend en outre un système de restriction (15) des mouvements du module d'accueil (12).

9. Dispositif d'amarrage selon l'une des revendications 1 à 8, comprenant en outre un système amortisseur (16) fixé à la base (11).

10. Engin spatial amarreur (3) comprenant un dispositif d'amarrage spatial (1) selon l'une des revendications 1 à 9.
